# EUROPÄISCHE PATENTSCHRIFT

(11) **EP 0 422 413 B1**
(45) Veröffentlichungstag und Bekanntmachung des Hinweises auf die Patenterteilung: **02.11.1995**
(21) Anmeldenummer: 90117809.5
(22) Anmeldetag: 15.09.1990
(51) Int. Cl.: D01H 7/04

(54) **Spindel mit geteiltem Kugellager**
Spindle with a split bearing
Broche avec un palier en deux parties

(30) Priorität: 12.10.1989 DE 3934152
(43) Veröffentlichungstag der Anmeldung: 17.04.1991
(73) Patentinhaber: MASCHINENFABRIK RIETER AG, CH-8406 Winterthur (CH)
(72) Erfinder: Rechenmacher, Daniel, CH-8400 Winterthur (CH); Oehy, Peter, CH-8405 Winterthur (CH)

(56) Entgegenhaltungen:
- DE-A- 3 843 651
- US-A- 2 680 659
- US-A- 4 463 994

## Beschreibung

Die Erfindung betrifft eine Spindel, insbesondere für große Drehzahlen, gemäß dem Oberbegriff des Patentanspruchs 1.

Bei derartigen Spindeln, die für Spinnmaschinen, insbesondere Ringspinnmaschinen, und Zwirnmaschinen benötigt werden, wird der Spindelschaft mit seinem unteren Abschnitt in einem Lagerrohr drehbar angeordnet, das über ein Gelenkstück mit einer Spindelbank verbindbar ist. Der Spindelschaft wird dabei von einem oben am Lagerrohr angeordneten Halslager und einem unten angeordneten Fußlager jeweils radial abgestützt. Dem Fußlager ist dabei eine Lagerplatte zugeordnet, auf der der Spindelschaft mit seinem entsprechend geformten Schaftfuß aufsitzt, so daß ein Punktlager gebildet wird, das den Spindelschaft einseitig axial abstützt.

Werden derartige bekannte Spindeln zum Beispiel beim Spinnen mit sehr hohen Drehzahlen betrieben, also mit Drehzahlen über 30.000 min⁻¹, so fangen die Spindeln an zu hüpfen, was zu Fadenbrüchen und zu einer verschlechterten Garnqualität führen kann.

Ferner ist es erforderlich, jeder Spindel einen sogenannten Spindelhaken zuzuordnen, der an der Spindelbremse angeordnet ist, um beim Wechseln der auf dem Spindelschaft aufgewickelten Kopse ein Herausziehen des Spindelschaftes aus seinem Lagerrohr zu verhindern.

Derartige Spindelhaken an der Spindelbremse führen zu unerwünschten Flugansammlungen, die im Laufe der Zeit so stark anwachsen können, daß die Spindel auch während des normalen Betriebs gebremst wird. Insbesondere bei hohen Drehzahlen macht sich dies äußerst störend bemerkbar.

Ein weiterer Nachteil bei derartigen bekannten Spindeln besteht darin, daß der Schaftfuß in einem Punktlager gelagert ist, welches sich sehr schlecht schmieren läßt, da Schmiermittel aus dem eigentlichen Lagerbereich des Punktlagers herausgedrückt werden, wodurch eine relativ hohe Lagerreibung entsteht, die zu einem erhöhten Verschleiß des Lagers führt.

Aus der US-Patentschrift 2,680,659 ist eine mit zwei Wälzlagern abgestützte Spindel bekannt, wobei das untere Wälzlager am Außenring zweiseitig axial mittels Federn elastisch abgestützt ist. Der Außenring des unteren Lagers wird dadurch spielfrei gehalten, ebenso wie der Außenring des oberen Wälzlagers, jedoch ist eine geringe Vertikalbewegung der Spindelachse innerhalb der Lagerspiele möglich. Erfahrungsgemäß neigen Spindeln dazu, sich innerhalb des Spiels zu bewegen.

Aus dem Stand der Technik sind Wälzlager mit einem geteilten Laufring bekannt, beispielsweise aus der US-Patentschrift 4,463,994. Solche Lager lassen sich weitgehend spielfrei ausführen, wobei aufgrund der Fertigungstoleranzen doch immer mit einem Restspiel zu rechnen ist. Ein solches Restspiel kann sich aber bei schnell laufenden Spindeln dennoch als nachteilig erweisen.

Der Erfindung liegt nun die Aufgabe zugrunde, die obigen Nachteile zu beheben und eine Spindel der eingangs genannten Art so auszubilden, daß sie auch bei hohen und sehr hohen Drehzahlen einen einwandfreien Spinnbetrieb sicherstellt.

Diese Aufgabe wird erfindungsgemäß durch die Merkmale des Patentanspruchs 1 gelöst.

Durch die erfindungsgemäße zweiseitige axiale Abstützung des Spindelschaftes mittels Lagerelementen, die von einer Federkraft axial aufeinandergedrückt werden, läßt sich eine sehr gute, praktisch spielfreie zweiseitige axiale Führung des Spindelschaftes bewirken, die auch bei Drehzahlen von 30.000 min⁻¹ bis 60.000 min⁻¹ oder mehr, wie z.B. bei Glockenspinnmaschinen vorkommen können, dafür sorgt, daß der vom Spindelschaft getragenen Kops einwandfrei rotiert.

Die Federvorspannung zwischen den beiden Lagerelementen dient dabei nicht nur zur Beseitigung eines axialen Spiels, sondern ermöglicht es, daß beim Einsetzen des Spindelschaftes in das Lagerrohr die Lagerelemente, die den Spindelschaft entgegen nach oben wirkender Kräfte in seiner gewünschten Position halten, so ausweichen können, daß ein Einsetzen des Spindelschaftes in das Lagerrohr ohne weiteres ermöglicht wird.

Infolge des gleichmäßigen Laufs ohne jedes axiale Hüpfen der Spindel auch bei sehr hohen Drehzahlen kann bei der erfindungsgemäßen Spindel nunmehr auch auf sogenannte Spindelhaken oder andere Sperrelemente, die den Spindelschaft im Lagerrohr halten, verzichtet werden, wodurch neben der Vermeidung von unerwünschten Flugansammlungen auch die Automatisierung der einzelnen Bedienungsvorgänge an einer Spinn- oder Zwirnmaschine erleichtert wird, da auf Bauteile, die die Automatisierung erschweren, verzichtet werden kann.

Es ist also wichtig, den Spindelschaft spielfrei zweiseitig axial zu führen und dabei die Lager so auszubilden, daß der Spindelschaft beim Einsetzen in das Lagerrohr mit den axial wirkenden Lagerelementen verrastbar ist.

Um die für die axial spielfreie Lagerung erforderlichen Federkräfte möglichst genau einstellen zu können, ist die Ausführungsform nach Anspruch 2 vorgesehen.

Die Ausführungsform nach Anspruch 3 ermöglicht es, den Aufbau der erfindungsgemäßen Spindel weiter zu vereinfachen.

Eine besonders bevorzugte praktische Ausgestaltung der Erfindung ist in den Ansprüchen 4 bis 6 beschrieben. Bei dem entsprechend Anspruch 6 als Fußlager vorgesehenen Rillenkugellager dienen die Lagerkugeln praktisch als Rastkugeln, die beim Einsetzen des Spindelschaftes radial elastisch nach außen ausweichen können, sobald die axial wirkenden Lagerelemente, also Ober- und Unterring, auseinandergedrückt sind, um in die als Rast dienende Lagerrille am Spindelschaft einzurasten, sobald sich der Spindelschaft in der gewünschten Axialstellung befindet.

Die erfindungsgemäße Verwendung eines Kugellagers, das nicht in einem Ölsumpf läuft, bringt auch den Vorteil mit sich, daß weniger Energie als bei einem Gleit-Punktlager erforderlich ist. Weiter ist das Einsetzen der Spindel verbessert, denn durch Hineinstoßen der Spindel in ein dem Stand der Technik entsprechendes Gleit-Punktlager kann bereits Schaden entstehen. Weiter ist bei der Erfindung vorteilhaft, daß die Spindel mit Lager ohne Neuzentrierung austauschbar ist.

Besonders vorteilhaft sind dabei die Ausführungsformen nach Anspruch 7 und 8.

Bei den Ausführungsformen nach Anspruch 9 bis 11 wird es ermöglicht, für die Lager im Lagerrohr eine geschlossene Lagerschmierung zu schaffen. Es ist also mit diesen Ausführungsformen möglich, ein Austreten des Schmiermittels für die Lager aus dem Lagerrohr zu vermeiden.

Dies ist insbesondere dann von Vorteil, wenn das Lagerrohr, insbesondere mit seinem unteren, dem Fußlager zugeordneten Ende, in einer entsprechenden hülsenförmigen Dämpfungsspirale aufgenommen ist, die ihrerseits in einer Dämpfungsflüssigkeit, zum Beispiel einem Öl, angeordnet ist.

Es wird dabei also ermöglicht, das Schmiermittel für die Lager unabhängig von der Dämpfungsflüssigkeit für die außerhalb des Lagerrohrs angeordnete Dämpfungsspirale zu wählen.

Bei den Ausführungsformen nach Anspruch 12 und 13 wird durch die erfindungsgemäße Speicherhülse ein zentrales Schmiersystem für beide Lager, also für das Hals- und das Fußlager geschaffen, das über lange Zeit eine einwandfreie Schmierung der Lager sicherstellt. Zum Nachfüllen von Schmiermittel ist dabei eine Schmieröffnung entsprechend Anspruch 13 vorgesehen, um Schmiermittel in das Lagerrohr nachfüllen zu können, ohne daß der Spindelschaft aus dem Lagerrohr entnommen werden muß.

Ein wesentlicher Vorteil ist hierbei, daß das Lagerrohr praktisch ständig abgeschlossen ist, so daß kein Flug oder andere Verunreinigungen in das Lagerrohr und insbesondere in den Bereich der beiden Lager eindringen können. Auch durch die Schmieröffnung können praktisch keine Verschmutzungen in das Lagerrohr eindringen, da die Schmieröffnung auf der Innenseite des Lagerrohrs durch die Speicherhülse abgedeckt ist.

Um das Lagerrohr mit der darin verrasteten Spindel als geschlossene Einheit auf einfache Weise an einer Spindelbank ein- und ausbauen zu können, sind die Ausführungsformen nach Anspruch 14 und 15 vorgesehen.

Die Erfindung wird im folgenden beispielsweise anhand der Zeichnung näher erläutert; in dieser zeigt:
- Figur 1: eine teilweise geschnittene schematische Ansicht einer Spindel,
- Figur 2: einen Schnitt im wesentlichen nach Linie II-II nach Figur 1,
- Figur 2a: eine vergrößerte Schnittdarstellung des Bereichs IIA in Fig. 1,
- Figur 3: eine vergrößerte Schnittdarstellung des Bereichs III in Figur 1,
- Figur 3a: eine vergrößerte Schnittdarstellung des Bereichs-IIIA in Fig. 3 und
- Figur 4: eine Darstellung entsprechend Figur 3 einer anderen Ausführungsform der Spindel.

In den verschiedenen Figuren der Zeichnung sind einander entsprechende Bauteile mit gleichen Bezugszeichen bezeichnet.

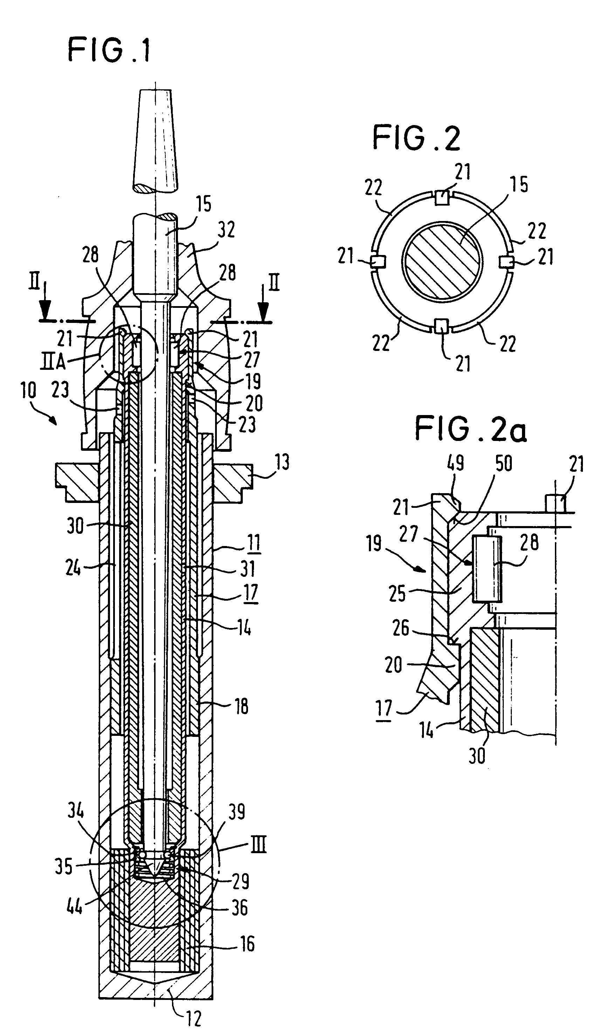

Die Spindel 10 besitzt, wie in Figur 1 gezeigt, ein Gehäuserohr 11, das an seinem unteren Ende von einem Boden 12 abgeschlossen wird. Die Spindel 10 ist mit dem Gehäuserohr 11 in üblicher, nicht näher dargestellter Weise an einer Spindelbank 13 befestigt, die sich in Längsrichtung einer nicht dargestellten Spinn- oder Zwirnmaschine erstreckt.

In dem Gehäuserohr 11 ist koaxial dazu ein Lagerrohr 14 für einen Spindelschaft 15 angeordnet. Dabei ist das Lagerrohr 14 mit seinem unteren, geschlossenen Ende in einer Dämpfungsspirale 16 angeordnet, die sich mit ihrem Außenumfang am Innenumfang des Gehäuserohrs 11 abstützt. Zwischen dem oberen, offenen Ende des Lagerrohrs 14 und dem Gehäuserohr 11 ist ein als Biflexelement ausgebildetes, rohrförmiges Gelenkstück 17 angeordnet, das mit seinem unteren Befestigungsabschnitt 18 in üblicher Weise im Gehäuserohr 11 gehalten ist.

An seinem oberen, aus dem Gehäuserohr 11 herausragenden Ende weist das Gelenkstück 17 - wie in Fig. 2 und 2a vergrößert dargestellt - einen Halte- und Zentrierabschnitt 19 auf, an dessen unteren Bereich ein ringförmig am Innenumfang umlaufender Schultersteg 20 ausgebildet ist. Von dem Schultersteg 20 erstrecken sich elastische Haltekrallen 21 mit nach innen vorspringenden Nasen 49 axial nach oben, die umfangsmäßig verteilt angeordnet sind. Umfangsmäßig zwischen den Haltekrallen 21 sind schalenförmige Zentrierstege 22 angeordnet.

Zwischen dem Halte- und Zentrierabschnitt 19 des Gelenkstücks 17 und seinem Befestigungsabschnitt 18 sind im oberen Bereich mehrere umfangsmäßige Querschlitze 23 angeordnet, während im unteren Bereich mehrere umfangsmäßig verteilte Längsschlitze 24 vorgesehen sind, von denen in Figur 1 nur einer dargestellt ist.

Das Lagerrohr 14 besitzt an seinem oberen Ende einen radial nach außen vorstehenden Haltebund 25, der eine unten liegende Abstützschulter 26 bildet.

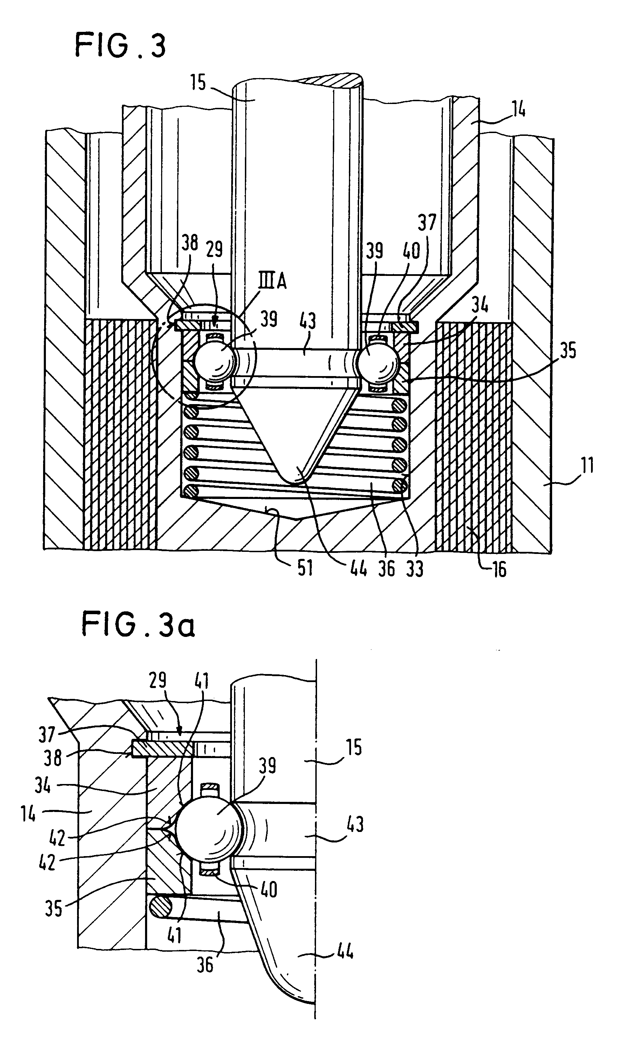

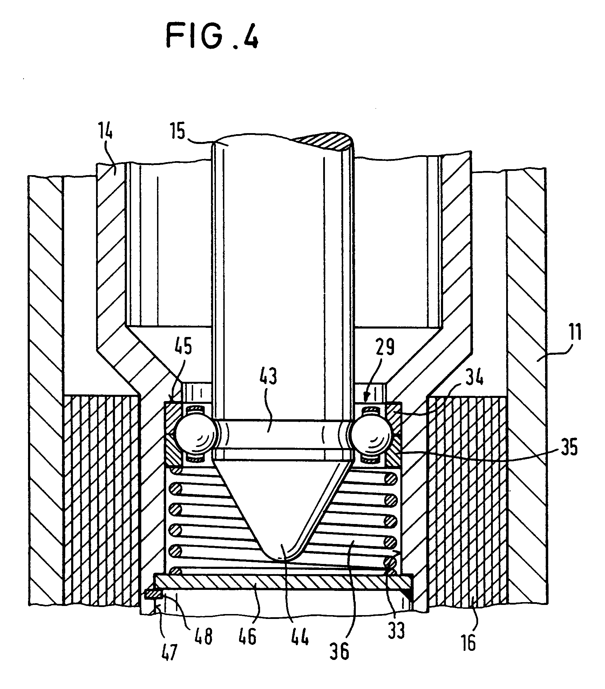

Im Bereich des Haltebundes ist im Lagerrohr 14 ein als Wälzlager ausgebildetes Halslager 27 mit Lagerrollen 28 vorgesehen, das zur drehbaren Abstützung des Spindelschaftes 15 dient. Im Bereich des unteren Endes des Lagerrohrs 14 ist zur weiteren drehbaren Lagerung des Spindelschaftes 15 ein Fußlager 29 angeordnet, das anhand von Figur 3 und 4 im einzelnen näher beschrieben wird.

Zwischen dem Halslager 27 und dem Fußlager 29 ist eine Speicherhülse 30 zur Aufnahme von Schmiermittel für die Lager 27, 29 koaxial im Lagerrohr 14 angeordnet, die den in das Lagerrohr eingesetzten Spindelschaft 15 mit Spiel umgibt. Um der Speicherhülse 30 von außen Schmiermittel zuführen zu können, ist im Lagerrohr 14 eine Schmieröffnung 31 angeordnet.

An dem im montierten Zustand der Spindel 10 aus dem Lagerrohr 14 vorstehenden Abschnitt des Spindelschaftes 15 ist in bekannter Weise ein im wesentlichen glockenförmig ausgebildeter Wirtel 32 befestigt, der den Halte- und Zentrierabschnitt 19 des Gelenkstücks 17 und die obere Öffnung des Gehäuserohrs 11 überdeckt, um das Eindringen von Schmutz und Flug im wesentlichen zu verhindern.

Wie Figur 3 und 3a zeigen, weist das Lagerrohr 14 im Bereich des unteren Endes, mit dem es in eine Dämpfungsspirale 16 eingesetzt ist, eine Lagerbohrung 33 auf, in die das vorzugsweise als Rillenkugellager ausgebildete Fußlager 29 eingesetzt ist. Der Außenring des Fußlagers 29 besteht dabei aus einem Oberring 34 und einem Unterring 35, die von einer sich am Unterring 35 abstützenden Druckfeder 36 gegeneinander und gemeinsam nach oben gegen einen Sprengring 37 gedrückt werden, der in einer entsprechenden Nut 38 im Innenumfang des Lagerrohrs 14 angeordnet ist.

Lagerkugeln 39 des Fußlagers 29 werden von einem Kugelkäfig 40 im Fußlager 29 gehalten. Der Ober- und Unterring 34, 35 des Fußlagers 29 weisen in ihrem gegenseitigen Berührungsbereich radial innen liegende Ausnehmungen auf, die zusammen die als äußere Lagerbahn dienende äußere Laufrille 41 für die Lagerkugeln 39 bilden. Außerdem weisen der Ober- und Unterring 34, 35 in ihrem Berührungsbereich jeweils eine radial innen liegende Abschrägung 42 auf, um ein nach außen Drucken der Lagerkugeln 39 beim noch zu beschreibenden Einsetzen des Spindelschaftes 15 in das Fußlager 29 bzw. in das Lagerrohr 14 zu erleichtern. Der innere Laufring für die Lagerkugeln 39 des Fußlagers 29 wird von einer umfangsmäßig um den Spindelschaft 15 umlaufenden Lagerbahn bzw. Lagerrille 43 gebildet, die axial etwas oberhalb eines sich konisch verjüngenden Schaftfußes des Spindelschaftes 15 vorgesehen ist.

Das in Figur 4 im Bereich seines unteren Endes dargestellte Lagerrohr 14 weist eine nach unten offene Lagerbohrung 33 auf, die nach oben durch eine Ringschulter 45 begrenzt ist. Der Ober- und Unterring 34, 35 des Fußlagers 29 werden wiederum von einer Druckfeder 36 gegeneinander und gemeinsam gegen die Ringschulter 45 gedrückt, wobei sich die Druckfeder 36 mit ihrem anderen Ende an einer Bodenplatte 46 abstützt, die in eine an die Lagerbohrung 33 anschließende Bohrung 47 mit erweitertem Durchmesser eingesetzt ist und dort entweder durch einen Sprengring 48 (links in Figur 4 dargestellt) oder durch Schweißen (rechts in Figur 4 dargestellt) befestigt ist.

Um die erfindungsgemäße Spindel zu montieren, wird zunächst in üblicher Weise die Dämpfungsspirale 16 und das Gelenkstück 18 im Gehäuserohr befestigt. Nun kann das Lagerrohr 14, in das das Fußlager 29, die Speicherhülse 30 und das Halslager 27 eingesetzt sind, in das Gehäuserohr 11 eingeführt werden. Sobald dabei die Abstützschulter 26 mit den radial nach innen vorspringenden Nasen 49 der Haltekrallen 21 in Eingriff treten, werden die Haltekrallen 21 radial nach außen gedrückt, so daß das Lagerrohr 14 mit seinem Haltebund zwischen die Zentrierstege 22 eingesetzt werden kann. Gleichzeitig wird das Lagerrohr 14 mit seinem unteren Ende in die Dämpfungsspirale 16 eingeführt.

Sobald der Haltebund 25 mit seiner Abstützschulter 26 an dem Schultersteg 20 des Gelenkstücks 17 anliegt, können die Haltekrallen 21 nach innen zurückfedern, wobei die Nasen 49 etwas über den oberen Rand des Lagerrohrs 14 übergreifen, um das Lagerrohr 14 gegen ein ungewolltes axiales Verschieben nach oben im Gelenkstück 17 zu sichern.

Das Lagerrohr 14 ist nun zentriert im Gehäuserohr 11 angeordnet.

Als nächstes kann dann der Spindelschaft 15 in das Lagerrohr 14 eingesteckt werden. Sobald der Spindelschaft 15 fast vollständig in das Lagerrrohr 14 eingesteckt ist, gelangt der Schaftfuß 44 mit den Lagerkugeln 39 des Fußlagers 29 in Eingriff und drückt diese in Folge seiner Konizität axial nach unten und radial nach außen. Die Lagerkugeln 39 drücken dabei ihrerseits den Unterring 35 gegen die Kraft der Druckfeder 36 nach unten, so daß sie nach außen ausweichen können, um so ein vollständiges Einsetzen des unteren Endes des Spindelschaftes 15 in das Fußlager 29 zu ermöglichen.

Sobald dabei die Lagerrille 43 in den Bereich der Lagerkugeln kommt, können diese von dem von der Druckfeder 36 beaufschlagten Unterring 35 nach innen zurückgedrückt werden, so daß der Unterring 35 wieder mit dem Oberring 34 in Anlage kommt. Die Lagerkugeln sind nun radial innen in der Lagerrille 43 des Spindelschaftes 15 und radial außen in der von den Ausnehmungen 41 im Ober- und Unterring 34, 35 gebildeten Laufrille angeordnet. Der Spindelschaft 15 ist also mittels des Fußlagers 29, ggf. lösbar, mit dem Lagerrohr 14 verrastet.

Der Spindelschaft 15, der im Bereich des Halslagers 27 nur radial abgestützt ist, wird somit vom Fußlager 29 sowohl in Radialrichtung als auch in Axialrichtung gehalten, so daß der Spindelschaft 15 sich nicht ungewollt in axialer Richtung nach oben oder unten verschieben kann.

Die von dem Fußlager 29 auf den Spindelschaft 15 ausgeübte axiale Haltekraft und die von den Haltekrallen 21 auf das Lagerrohr 14 ausgeübte axiale Haltekraft sind dabei so groß, daß eine auf den Spindelschaft 15 aufgesetzte und mit einem Faden bewickelte Hülse - also z.B. ein fertiger Kops - vom-Spindelschaft 15 abgezogen werden kann, ohne daß der Spindelschaft 15 aus dem Lagerrohr 14 oder das Lagerrohr 14 aus dem Gelenkstück 17 herausgezogen wird.

Obwohl es möglich ist, die von der Druckfeder 36 bewirkte axiale Haltekraft des Fußlagers 29 auf den Spindelschaft 15 so zu bemessen, daß der Spindelschaft 15 unter nach außen Drücken der Lagerkugeln 39 aus dem Halterohr 14 herausgezogen werden kann, wird die Axialhaltekraft für den Spindelschaft 15 vorzugsweise so dimensioniert, daß sie größer ist, als die axiale Haltekraft der Haltekrallen 21 des Gelenkstücks 17 für das Lagerrohr 14.

Wird nun der Spindelschaft mit einer Kraft, die größer ist, als die Kraft, die zum Abziehen einer Hülse vom Spindelschaft erforderlich ist, axial nach oben gezogen, so werden die Haltekrallen 21 von einem abgeschrägten Rand 50 am oberen Ende des Lagerrohrs 14 radial nach außen gedrückt, so daß der Spindelschaft 15 zusammen mit dem Lagerrohr 14 aus dem Gelenkstück 17 bzw. dem Gehäuserohr 11 herausgezogen werden kann.

Hierdurch wird es also ermöglicht, den Spindelschaft 15 zusammen mit dem Lagerrohr 14 als Montageeinheit aus dem Gehäuserohr 11 zu entnehmen, um zum Beispiel durch die Schmieröffnung 31 Schmiermittel in das Lagerrohr 14 bzw. die Speicherhülse 30 nachzufüllen. Ein wesentlicher Vorteil ist hierbei, daß das Lagerrohr 14 eine im wesentlichen geschlossene Einheit bildet, in die praktisch kein Flug oder Schmutz eindringen kann. Eine Verschmutzung der Lager durch die Schmieröffnung 31 ist nicht zu befürchten, da durch diese Öffnung eintretender Schmutz von der Speicherhülse 30 zurückgehalten wird.

## Patentansprüche

1. Spindel für Textilmaschinen, insbesondere Ringspinnmaschinen, mit einem Lagerrohr (14), in das ein unteres Fußlager (29) eingesetzt ist und dem im Bereich seines oberen Endes ein Halslager (27) zugeordnet ist, und mit einem mit seinem unteren Abschnitt drehbar in das Lagerrohr (14) eingesetzten Spindelschaft (15) der im Hals- und Fußlager radial und von einem der beiden Lager (27,29) zweiseitig axial abgestützt ist,
dadurch gekennzeichnet,
daß eines der Lager (29) im Lagerrohr (14) ein erstes und ein zweites den Spindelschaft je einseitig axial abstützendes Lagerelement (34) bzw. (35) aufweist, wobei die beiden Lagerelemente (34,35) durch eine Feder (36) gegeneinander vorgespannt sind.

2. Spindel nach Anspruch 1,
dadurch gekennzeichnet,
daß die beiden einseitig axial wirkenden Lagerelemente (34,35) gemeinsam in einem der beiden Lager (27,29) vorgesehen sind.

3. Spindel nach Anspruch 1 oder 2,
dadurch gekennzeichnet,
daß die Lagerelemente (34,35) im Fußlager (29) vorgesehen sind.

4. Spindel nach Anspruch 2 oder 3,
dadurch gekennzeichnet,
daß als einseitig axial wirkende Lagerelemente ein Ober- und ein Unterring (34 bzw. 35) eines Wälzlageraußenringes vorgesehen sind, die die äußere Lagerbahn (41) für die Wälzkörper (39) tragen, während die innere Lagerbahn (43) am Spindelschaft (15) angeordnet ist.

5. Spindel nach Anspruch 4,
dadurch **gekennzeichnet,**
daß die Wälzkörper (39) durch einen entsprechenden Käfig (40) derart an der äußeren Lagerbahn (41) gehalten sind, daß sie bei axial auseinander geschobenen Ober- und Unterring (34, 35) radial nach außen ausweichen können.

6. Spindel nach Anspruch 3 bis 5,
dadurch **gekennzeichnet,**
daß das Fußlager (29) als Rillenkugellager ausgebildet ist.

7. Spindel nach Anspruch 4 bis 6,
dadurch **gekennzeichnet,**
daß der Unterring (35) axial verschiebbar im Lagerrohr (14) angeordnet ist und nach oben gegen den zumindest einseitig axial festgelegten Oberring (34) vorgespannt ist.

8. Spindel nach Anspruch 4 bis 7,
dadurch **gekennzeichnet,**
daß die den Unterring (35) nach oben vorspannende Feder (36) an einem das Lagerrohr (14) nach unten dicht abschließenden Bodenelement (46, 51) abgestützt ist.

9. Spindel nach Anspruch 7 oder 8,
dadurch **gekennzeichnet,**
daß das Fußlager (29) in eine als Sackbohrung ausgebildete Lagerbohrung (33) eingesetzt ist und daß zur axialen Festlegung des Oberringes (34) ein in eine entsprechende Nut (38) eingesetzter Sprengring (37) vorgesehen ist.

10. Spindel nach Anspruch 7 oder 8,
dadurch **gekennzeichnet,**
daß der Oberring (34) an einer sich radial nach innen erstreckenden Ringschulter (45) anliegt und daß die als Durchgangsbohrung ausgebildete Lagerbohrung (33) mittels einer Bodenplatte (46) dicht verschlossen ist.

11. Spindel nach Anspruch 10,
dadurch **gekennzeichnet,**
daß die Bodenplatte (46) lösbar am Lagerrohr (14) befestigt ist.

12. Spindel nach einem der vorhergehenden Ansprüche,
dadurch **gekennzeichnet,**
daß zwischen dem Fußlager (29) und dem im Lagerrohr (14) angeordneten Halslager (27) eine Speicherhülse (30) in das Lagerrohr (14) eingesetzt ist, die zur Aufnahme von Schmiermittel für die Lager (27, 29) dient.

13. Spindel nach Anspruch 12,
dadurch **gekennzeichnet,**
daß in dem die Speicherhülse (30) umgebenden Wandabschnitt des Lagerrohrs (14) eine Schmieröffnung (31) vorgesehen ist.

14. Spindel nach Anspruch 12 oder 13,
dadurch **gekennzeichnet,**
daß am dem Halslager (27) zugeordneten oberen Ende des Lagerrohrs (14) Befestigungsmittel (25, 26) vorgesehen sind, um das Lagerrohr (14) zentriert an einer Spindelbank (13) anordnen zu können.

15. Spindel nach Anspruch 14,
dadurch **gekennzeichnet,**
daß die Befestigungsmittel einen umfangsmäßig um das Lagerrohr (14) umlaufenden Haltebund (25) mit einer Abstützschulter (26) umfassen, der mit entsprechenden Halte- und Zentriermitteln (20, 21, 49 bzw. 22) an einem vorzugsweise als Biflexelement ausgebildeten Gelenkstück (17) zur Befestigung an einer Spindelbank (13) zusammenwirkt.

## Claims

1. A spindle for textile machines, in particular ring spinning machines, with a bearing tube (14) in which a lower step bearing (29) is inserted and with which a spindle collar bearing (27) is associated near its top end, the spindle having a centre shaft (15) rotatably mounted by way of its bottom part in the bearing tube (14), the centre shaft being supported radially in the step bearing and spindle collar bearing and axially on two sides by one of the two bearings (27, 29), characterized in that one of the bearings (29) in the bearing tube (14) is provided with a first and a second bearing element (34) or (35) which each support the spindle shaft axially on one side, with the two bearing elements (34, 35) being pretensioned towards one another by a spring (36).

2. A spindle as claimed in claim 1, characterized in that the two bearing elements (34, 35) which are effective in one axial direction are provided jointly in one of the two bearings (27, 29).

3. A spindle as claimed in claim 1 or 2, characterized in that the bearing elements (34, 35) are provided in the step bearing (29).

4. A spindle as claimed in claim 2 or 3, characterized in that a top race element and a bottom race element (34 and 35) of an outer race of a rolling bearing are provided as bearing elements effective in one axial direction and that they carry the outer raceway (41) for the rolling members (39), whereas the inner raceway (43) is arranged on the centre shaft (15).

5. A spindle as claimed in claim 4, characterized in that the rolling members (39) are retained by an appropriate cage (40) on the outer raceway (41) in such a way that they can move radially outwards when the top and bottom race elements (34, 35) are axially pushed apart from one another.

6. A spindle as claimed in claim 3 to 5, characterized in that the step bearing (29) is a deep groove ball bearing.

7. A spindle as claimed in claim 4 to 6, characterized in that the bottom race element (35) is arranged in the bearing tube (14) axially displaceable and is pretensioned upwardly against the top race element (34), the same being secured in at least one axial direction.

8. A spindle as claimed in claim 4 to 7, characterized in that the spring (36) pretensioning the bottom race element (35) upwardly is supported on a floor element (46, 51) which closes the bearing tube (14) downwardly in a sealing manner.

9. A spindle as claimed in claim 7 or 8, characterized in that the step bearing (29) is inserted in a bearing bore (33) arranged as a blind bore and that a circlip (37) engaged in a respective groove (38) is provided for determining the top race element (34) axially.

10. A spindle as claimed in claim 7 or 8, characterized in that the top race element (34) engages with an annular shoulder (45) extending radially inwardly and that the bearing bore (33), which is arranged in the form of a through-hole, is closed sealingly by means of a floor plate (46).

11. A spindle as claimed in claim 10, characterized in that the floor plate (46) is detachably attached to the bearing tube (14).

12. A spindle as claimed in one of the preceding claims, characterized in that a sleeve (30) adapted to store lubricant for the bearings (27, 29) is inserted in the bearing tube (14) between the step bearing (29) and the spindle collar bearing (27) disposed in the bearing tube (14).

13. A spindle as claimed in claim 12, characterized in that the wall section of the bearing tube (14) encompassing the storage sleeve (30) is provided with a lubricating aperture (31).

14. A spindle as claimed in claim 12 or 13, characterized in that fixing means (25, 26) are provided on the upper end of the bearing tube (14) associated with the spindle collar bearing (27) in order to arrange the bearing tube (14) in a centered manner on a spindle rail (13).

15. A spindle as claimed in claim 14, characterized in that the fixing means comprise a retaining collar (25) which extends around the circumference of the bearing tube and is provided with a supporting shoulder (26) which cooperates with respective retaining and centering means (20, 21, 49 and 22, respectively) on a flexible member (17), preferably arranged as a biflex element, for attachment to a spindle rail (13).

## Revendications

1. Broche pour machines textiles, particulièrement des machines à filer a anneaux, avec un tube de paliers (14) dans lequel est insérée une crapaudine inférieure (29) et auquel est attribué un collet (27) dans la zone de son extrémité supérieure, et avec un corps de broche (15) qui est logé d'une manière rotative dans le tube de paliers (14) avec sa partie inférieure, et qui est soutenu radialement dans le collet et la crapaudine, et soutenu axialement des deux côtés, par l'un des deux paliers (27, 29),
caractérisée par le fait que
l'un des paliers (29) dans le tube de paliers (14) possède un premier et un deuxième éléments de palier (34) respectivement (35) qui soutiennent axialement le corps de broche, chacun par un côté, et ou les deux éléments de palier (34, 35) sont prétendus l'un contre l'autre par un ressort (36).

2. Broche selon revendication 1,
caractérisée par le fait que
les deux éléments de palier (34, 35) agissant axialement par un côté, sont prévus ensemble dans l'un des deux paliers (27, 29).

3. Broche selon revendication 1 ou 2,
caractérisée par le fait que
les éléments de palier (34, 35) sont prévus dans la crapaudine (29).

4. Broche selon revendication 2 ou 3,
caractérisée par le fait
qu'un anneau supérieur et un anneau inférieur (34 respectivement 35) d'un anneau extérieur d'un palier à roulement, sont prévus comme éléments de palier agissant axialement par un côté, lesquels portent le chemin de roulement extérieur (41) pour les corps de roulement (39), tandis que le chemin de roulement intérieur (43) est disposé sur le corps de broche (15).

5. Broche selon revendication 4,
caractérisée par le fait que
les corps de roulement (39) sont maintenus sur le chemin de roulement extérieur (41) par une cage correspondante (40), de telle sorte qu'ils peuvent céder radialement vers l'extérieur lorsque les anneaux supérieur et inférieur (34, 35) sont déplacés axialement l'un de l'autre.

6. Broche selon les revendications 3 à 5,
caractérisée par le fait que
la crapaudine (29) est formée comme roulement rainuré à billes.

7. Broche selon les revendications 4 à 6,
caractérisée par le fait que
l'anneau inférieur (35) est disposé de manière à pouvoir être déplacé axialement dans le tube de paliers (14), et qu'il est prétendu vers le haut contre l'anneau supérieur (34) qui est localisé axialement au moins d'un côté.

8. Broche selon les revendications 4 à 7,
caractérisée par le fait que
le ressort (36) donnant une prétension vers le haut à l'anneau inférieur (35) s'appuie sur un élément de fond (46, 51) qui ferme hermétiquement le tube de paliers (14) vers le bas.

9. Broche selon revendication 7 ou 8,
caractérisée par le fait que
la crapaudine (29) est insérée dans un alésage de palier (33) formé comme trou borgne, et que, pour la localisation axiale de l'anneau supérieur (34), un anneau ressort (37) est prévu inséré dans une rainure correspondante (38).

10. Broche selon revendication 7 ou 8,
caractérisée par le fait que
l'anneau supérieur (34) repose contre un épaulement annulaire (45) s'étendant radialement vers l'intérieur, et'que l'alésage de palier (33) formé comme trou de passage est fermé hermétiquement à l'aide d'une plaque de fond (46).

11. Broche selon revendication 10,
caractérisée par le fait que
la plaque de fond (46) est fixée d'une manière détachable sur le tube de paliers (14).

12. Broche selon l'une des revendications précédentes,
caractérisée par le fait
qu'une douille réservoir (30) est logée dans le tube de paliers (14), entre la crapaudine (29) et le collet (27) disposés dans le tube de paliers (14), laquelle sert à la réception d'un moyen de lubrification pour les paliers (27, 29).

13. Broche selon revendication 12,
caractérisée par le fait
qu'une ouverture de lubrification (31) est prévue dans la partie de paroi du tube de paliers (14) entourant la douille réservoir (30).

14. Broche selon revendication 12 ou 13,
caractérisée par le fait que
des moyens de fixation (25, 26) sont prévus dans l'extrémité supérieure du tube de paliers (14) affectée au collet (27), afin de pouvoir disposer d'une manière centrée le tube de paliers (14) sur un banc porte-broches (13).

15. Broche selon revendication 14,
caractérisée par le fait que
les moyens de fixation comprennent un collier de maintien (25) entourant la périphérie du tube de paliers (14), avec un épaulement d'appui (26), collier de maintien qui agit conjointement avec des moyens de maintien et de centrage correspondants (20, 21, 49 respectivement 22), sur une pièce articulée (17) formée de préférence comme élément Biflex, pour la fixation sur un banc porte-broches (13).
